# EUROPEAN PATENT APPLICATION

(11) **EP 4 245 918 A1**
(43) Date of publication of application: **20.09.2023**
(21) Application number: 23161860.4
(22) Date of filing: 14.03.2023
(51) Int. Cl.: E01C 9/00, A01G 13/02

(54) **TREE BUNKER AND SYSTEM FOR INSTALLING SUCH TREE BUNKER**

(30) Priority: 14.03.2022 BE 202205174
(71) Applicant: EBEMA NV, 3690 Zutendaal (BE)
(72) Inventor: PANIS, Bert, 2160 Wommelgem (BE)
(74) Representative: Bureau M.F.J. Bockstael NV

(57) **Abstract**

Tree bunker (1) comprising the following components:
- one or more main elements (2) consisting of a base plate (3) with four legs thereon (4), said main elements (2) being installed at a relative distance from each other in a pit (11) in the substrate;
- whereby the legs (4) are provided lengthways with provisions (7) into which partitions (8) can be slid;
- a number of partitions (8) slideably mounted in the aforementioned provisions (7) between two adjoining legs (4) of one main element (2) and/or between two adjoining legs (2) of two different adjoining main elements (2) to form a tub (9);
- a number of cover plates (10) mounted on the legs, whereby the corners (10a) of the cover plate (10) each rest on an upright leg, in order to cover the space created by the main elements (2) and partitions (8);
- if relevant one or more frames (12) to mount on the legs (4), whereby the corners (12) of the frame (12) each rest on an upright leg.

## Description

The present invention relates to a tree bunker.

A tree bunker, sometimes also referred to as root bunker, is a (largely) underground construction that is used to provide growing spaces for trees in an otherwise paved substrate.

In urban areas it is customary to provide greenery, among others in the form of trees, but the ground, the heavy loads and paving often do not allow this.

Not only can the tree roots often not grow well due to the present paving and heavy loads on the substrate because of traffic, parking spaces and the like, also the presence of all kinds of constructions in the substrate often hinder the growth of the trees and tree roots.

Conversely, the tree roots can cause damage to underground constructions and utility lines and the so-called root uplift can also cause damage to the paving.

A tree bunker will provide a suitable growing space for a tree in an urban environment.

Not only does it have to be possible to integrate such tree bunker properly in the substrate, taking into account the drive-over capability by all kinds of traffic, the height of the ground water level, the paving possibilities and the like, said tree bunker must furthermore provide sufficient root volume in otherwise often chiefly paved substrates in order to allow trees to continue growing to effectively reach their targeted age.

A tree bunker is a self-bearing construction with an internal or spanned space to realise a shielded root space, whereby the pressure load on the paving has no influence on the root space.

To date, tree bunkers are usually made of synthetic material.

A disadvantage of this is that synthetic material in the soil is not wanted everywhere and often is not a popular choice.

Furthermore, the systems with synthetic material also require special solutions to absorb the horizontal forces of the soil to be compacted located alongside.

Furthermore, many synthetic solutions work in combination with concrete poured on site to achieve the necessary final strengths.

In many synthetic systems backfilling the tree soil (in the tree bunker itself) and the backfill soil (in the adjoining space) must be done evenly and in layers to average out the pressure differences on the outer wall, as said outer walls are usually unable to absorb big forces in one direction.

In many synthetic systems, said tree soil needs to be added and compacted through openings from above. This is a relatively cumbersome method.

Alternatives from other materials such as for example concrete, steel or a combination of these and other materials exist but to date they are far more expensive than the synthetic solutions.

Solutions using tree granulate without containment elements around it, i.e. simply a hole in the ground in which tree granulate is poured and on which a tree grid is applied, are constructions with often restricted internal space such that usually the volume or content of the root space is restricted.

A tree granulate is a mixture of broken stone with a small share of nutrient. The stone chips, i.e. the broken stone, ensure the civil strength.

A disadvantage is that the tree is restricted in its root growth and thus its growth too, such that the tree cannot mature.

Another disadvantage of this is that due to the restricted root growth, the tree will be less and insufficiently stable.

Solutions with tree granulate need three times as much volume in terms of tree granulate compared to a tree bunker filled with tree soil. Tree soil does not contain broken stone, but only nutrient, such that three times less volume is needed.

The purpose of the present invention is to provide a solution to at least one of the aforementioned and other disadvantages.

The object of the present invention is a tree bunker whereby the tree bunker comprises the following components:
- one or more main elements consisting of a base plate with four legs thereon, said main elements being installed at a relative distance from each other in a pit in the substrate;
- whereby the legs are provided lengthways with provisions into which partitions can be slid;
- a number of partitions slideably mounted in the aforementioned provisions between two adjoining legs of one main element and/or between two adjoining legs of two different adjoining main elements to form a tub;
- a number of cover plates mounted on the legs, whereby the corners of the cover plate each rest on an upright leg, in order to cover the space created by the main elements and partitions;
- optionally one or more frames to be mounted on the legs, whereby the corners of the frame each rest on a leg.

The presence of a frame is optional, as it is also possible that a tree is planted along or next to the tree bunker, whereby the underground space is only used as growing space to allow the roots of the tree to develop and grow in said space, such that thus no frame is needed.

This provides the advantage that this is a modular and versatile system, such that the tree bunker is expandable based on only one type of main element to various dimensions and forms by suitably choosing the number of main elements and the arrangement thereof.

Consequently, a tree bunker can also be installed for very big trees, thus it is also suitable for trees of an order of magnitude 1.

The aforementioned frame will form an opening to plant a tree in the tree bunker.

A tree frame can be installed on this frame at a later time. Said tree frame is the finish that is visible around the tree later.

The advantage of said system structure is that relatively few main elements are needed for a relatively big area, because up to four plates can always support on one leg and because the partitions are also installed between legs of adjoining main elements.

Consequently, less material, installation time, etc. is needed, which reduces the total price compared to other systems.

Said system can be installed simply and quickly due to the always repetitive centre distance that needs to be respected between the legs. Furthermore, relatively few other elements are needed for the completion of the total system.

Yet another advantage is that the mounting depth can be easily adapted by varying the length of the legs, such that in this way it is easy to take into account the groundwater level, among others.

Yet an additional advantage is that the strength of the cover plate can be chosen depending on the load that the tree bunker will be subjected to, for example under a square, parking spaces or under a road surface. In this way the cover plate can optionally also immediately function as element paving. And an extra street layer and paving are not necessary.

In case of a relatively light load, the cover plate can be executed less strong, such that material and/or weight can be saved.

Moreover, the main elements and cover plates will be very stable when they are made from reinforced concrete. The partitions can also be made from reinforced concrete, such that maximum compacting of the backfill soil is possible.

In a preferred embodiment of a tree bunker according to the invention the main element comprises a rectangular base plate and four legs on the corners of the base plate, whereby the legs are provided with slots for partitions on every longitudinal side.

In a specific embodiment, the main element (2) is executed as a half main element or a quarter main element, i.e. as a half or a quarter of the aforementioned main element, comprising a ½, respectively ¼, base plate and two legs, respectively one leg.

The main element can be executed as a half or quarter main element, i.e. a main element which in vertical cross-section is divided in 1/2 or 1/4.

Consequently, almost every arrangement is possible and space is saved relative to a full main element if the installation of the latter were not possible.

A half rectangular main element has two legs and only takes up half of the space of a main element with four legs. A quarter rectangular main element has one leg and only takes up a quarter of the space of a rectangular main element with four legs.

Preferably, the legs are provided with provisions lengthways, in, over or between which, the aforementioned partitions can be slid.

Said provisions are for example slots or grooves.

'Lengthways' is understood to mean here that the slots extend along the length of the legs, from top to bottom. The partitions will transfer horizontal forces to the legs.

Preferably, the legs have a rectangular cross-section.

Preferably, the provisions are applied in the four longitudinal sides of the legs. Upon installing the main elements of the tree bunker, the provisions of the legs are applied such that they are oriented toward two adjoining legs.

The partitions can be mounted very quickly, simply by sliding the partitions into the slots, without still requiring any screwing, gluing, drilling or the like afterwards.

This will contribute to a quick and simple installation of the tree bunker.

Said partitions are strong enough to, once mounted, absorb all horizontal forces. Consequently, depending on the planning, the tree bunker can be backfilled and compacted entirely on the outside or entirely on the inside, a simultaneous backfilling of the inside-outside is thus not necessary.

Said type of tree bunker can consequently also be used as water tank, which may or may not be provided with tree soil.

According to a preferred characteristic of the invention, a spacer is applied between adjoining main elements, whereby the length dimension of the spacer is such that the distance between two adjoining legs of two adjoining main elements is equal to the distance between two adjoining legs of a main element.

By using the spacers, it is possible to arrange the main elements in a regular pattern.

By keeping an equal distance between different adjoining main elements, a regular pattern is created, such that the modularity of the tree bunker will increase.

Furthermore, this has the advantage that the partitions can all have an equal breadth.

In a preferred embodiment, the main elements are installed in the pit in a regular grid or lattice, hereinafter referred to as grid.

The regular grid means the legs will also be installed in a regular grid, such that the cover plates can all have equal dimensions and installing the tree bunker can be done efficiently and quickly.

The invention also relates to a method for installing a tree bunker according to the invention, whereby the method comprises the following steps:
- digging a pit in the substrate;
- optionally providing a foundation;
- installing the main elements with the legs, four legs in case of a rectangular main element, at a relative distance from each other, preferably at an equal distance from each other, optionallyusing the spacers;
- installing or mounting the partitions between adjoining legs to form a tub;
- filling the tub with the suitable tree soil;
- installing cover plates on the legs, whereby the corners of every cover plate are installed on the legs, four legs in case of a rectangular main element;
- optionally installing one or more frames on the legs whereby the corners of the frame rest on the legs, four legs in case of a rectangular main element.

It is understood that the advantages of this method is one of the advantages of the tree bunker itself.

An additional advantage of the tub filled with tree soil is that this can also serve as buffer basin in case of heavy rainfall.

It will also be easy to put the tree soil in the tree bunker, when the tub is formed and before it is wholly or partly covered with the cover plates.

In a specific embodiment, cover plates are used which are provided with an adjustment system with one or more adjusting bolts and one or more corresponding passages near the corners of the cover plate all this such that when the corners of the cover plates rest on a leg, the adjusting bolts, when applied in the passages, can be screwed up against an upper surface of the leg, and the method, after installing the cover plates, comprises the step of tightening the adjusting bolts in the passages up against the upper surface of the leg.

This has the advantage that it is possible to ensure that the cover plates are all completely stable. Indeed, in practice it is not always possible to set the (four) relevant legs on which a cover plate rests, at completely the same height, such that it is possible, for example, that one leg is slightly higher or lower than the other legs. The adjustment system allows said difference to be absorbed. The cover plates are then completely stable for the next layers to be added.

Evidently it is not necessary that all corners of every cover plate are provided with such adjustment system.

In a preferred embodiment of a method according to the invention, upon installing the cover plates on the legs on one of the corners of the cover plates a wedge-shaped element is applied between the relevant cover plate and the leg. Consequently, the cover plate cannot wobble and it is stable on the legs.

Consequently, the adjustment system is not required and tightening is not necessary.

The cover plates consequently lie loosely on the legs. On one of the corners of a cover plate, a wedge-shaped element is applied between the cover plate and the leg such that the cover plate comes to be completely stabilised and cannot move up and down. To this end, the cover plates can be installed on a rubber mat, or rubber can be provided at the end of the legs, such that concrete-concrete contact is avoided.

When four legs are mentioned in this text, this applies to the example of a rectangular main element. Consequently, generally speaking this refers to "all" legs of the main element.

Preferably, cover plates are used, the corners of which are truncated or topped such that, when they, per four, or all, rest on a leg, an opening is created that reaches up to the leg and the method, after installing the cover plates and optionallyafter tightening the aforementioned adjusting bolts, comprises the step of grouting the cover plates by filling the aforementioned opening with mortar or the like.

This has the advantage that the cover plates are completely fixed after grouting, i.e. that they form an assembly with the basic elements as it were. This will further increase the stability.

Once the cover plate is grouted, and it has cured, it can be driven over.

The adjustable corners of the cover plate need to be installed on the same legs as much as possible, to have to grout as few legs as possible.

To encase the mortar, compressible foam rubber or the like is provided on every leg between the leg and the corner of the cover plate.

Furthermore, the presence of the cover plates means the tree soil is not compressed by the aboveground load, such that they remain sufficiently aerated, such that the tree roots are able to grow optimally.

With the intention of better showing the characteristics of the invention, a few preferred embodiments of a tree bunker according to the invention and a method applied thereby are described hereinafter by way of an example without any limiting nature, with reference to the accompanying drawings, wherein:
figure 1 schematically shows a perspective view of a tree bunker according to the invention;
figure 2 schematically shows a main element according to the invention;
figure 3 shows a possible representation of a top view of a number of main elements in a grid;
figure 4 shows the section F4 from figure 1 on a larger scale;
figure 5 shows a detailed view of a main element with the compressible rubber or the like;
figure 6 shows the operation of the adjustment system;
figure 7 shows the detailed view of figure 5, but with installation of the cover plates;
figures 8-11 schematically show a number of example arrangements in a top view (A), side view (B) and perspective view (C) of a tree bunker according to the invention;
figure 12 shows a cross-section of an arrangement in a square tree bunker according to figure 8.

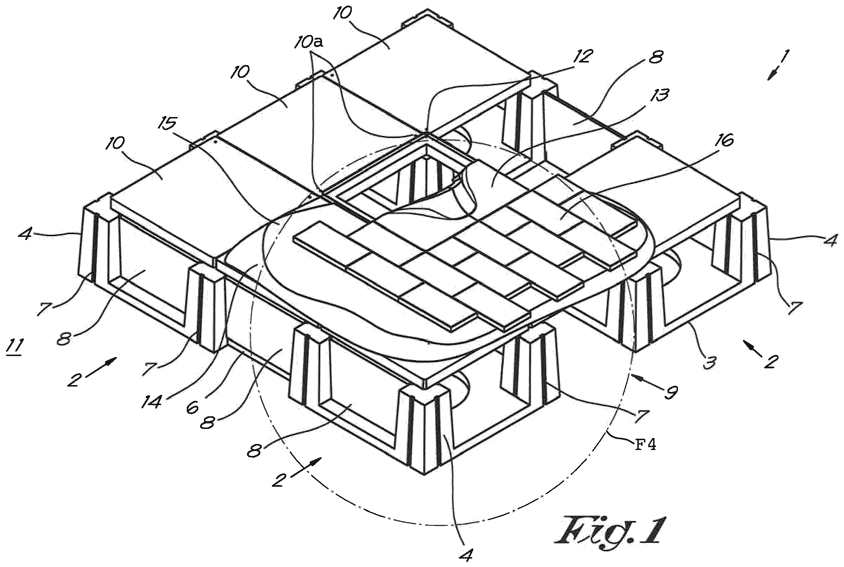

The tree bunker 1 according to the invention schematically shown in figure 1 essentially comprises a number of elements, as discussed in detail below.

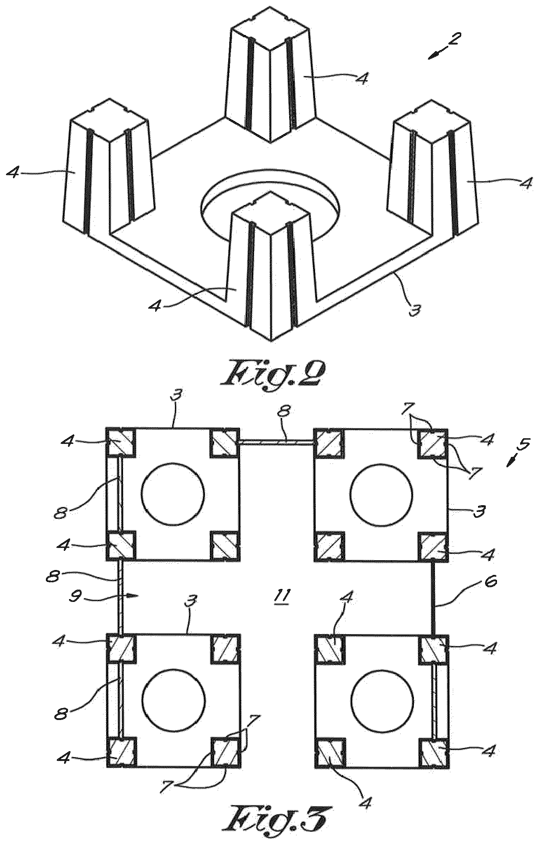

First of all, a number of main elements 2. Figure 2 shows a main element 2 in more detail.

A main element 2 consists of a base plate 3 with four legs 4 thereon in this case.

Preferably, the base plate 3 is provided with a central recess 24 of the base plate 3, here in the form of a circle, to save weight and to improve anchoring in ground.

In this case but not necessarily for the invention, the base plate 3 is square. The base plate 3 can also have another form, such as triangular for example.

It is also possible that the main element 2 is provided with one or two legs 4, instead of four legs 4.

The legs 4 are upright legs 4, which extend perpendicularly to the base plate 3.

This is shown schematically in figure 3, whereby it is visible that the main elements 2 are installed in a regular grid 5 in this case.

Regular grid 5 is understood to mean that the main elements 2 are installed in rows and columns according to a grid, the rows and columns of which intersect perpendicularly and whereby the distance between a main element 2 and all its close neighbours is the same.

Obviously it is not excluded that the relative distances between the main elements 2 are not the same, it is also possible that, for example, the distance between two main elements 2 in one row is different from the distance between two main elements 2 in one column.

Regular grid for triangular base plates is understood to mean that the base plates touch each other with one corner and have a clearance or distance relative to each other equal to a triangular cover plate. Other arrangements and distances are also possible, for example whereby cover plates of different forms are combined, such as triangular cover plates on triangular base plates and rectangular cover plates between adjoining base plates.

A combination of forms of base plates and suitable cover plates/partitions/frames in one tree bunker is feasible. Consequently, many arrangements are possible.

Several tree bunkers can also be combined into one assembly, with the same or different forms of main elements, base plates, cover plates, frames and partitions.

As shown in figure 1, a spacer 6 is applied between the base plates 3 between adjoining main elements 2.

In the shown figures, said spacer 6 is simply executed as a bar or slat. Obviously, said spacer 6 can be executed in different ways without departing from the scope of the invention.

The length dimension of the spacer 6 is in this case such that the distance between two adjoining legs 4 of two adjoining main elements 2 is equal to the distance between two adjoining legs 4 of a main element 2.

Consequently, a regular grid 5 is obtained, when all spacers 6 have the same length.

The legs 4 of the main element 2 have a square cross-section in this case. Although this is a preferred embodiment, obviously it is not excluded that the legs 4 have a different cross-section.

Said legs 4 are also provided with lengthways slots 7.

As shown in figure 3, four such slots 7 are provided in every upright leg 4.

Secondly, the tree bunker 1 also comprises a number of partitions 8.

Said partitions 8 are slid into the aforementioned slots 7. In this way, the partitions 8 are applied between two adjoining legs 4 to form a tub 9.

Instead of slots 7, grooves can also be provided, for example, between which the partitions 8 can be slid.

As shown in figure 3, the partitions 8 are applied both between two adjoining legs 4 of one main element 2 and between two adjoining legs 4 of two different adjoining main elements 2.

The exact locations of all partitions 8 are chosen such that a big open tub 9 is formed by the main elements 2 and the partitions 8.

The aforementioned partitions 8 are executed such that they are able to absorb the horizontal forces exerted on them during the installation of the tree bunker 1 or afterwards.

In this case, the partitions 8 are provided with openings but this is not necessary for the invention. It is also possible that they all have a partially open concrete structure.

This has the advantage that water and air can also enter or exit the pit 11 horizontally.

Preferably, the height of the aforementioned spacers 6 is equal to the thickness of the base plate 3 of the main element 2. This has the advantage that the height of a partition 8 between two adjoining legs 4 of one main element 2 is equal to the height of a partition 8 between two adjoining legs 4 of two different adjoining main elements 2.

The main elements 1 are provided with one or more lifting anchor points which can serve as mounting anchors for the underground tree root ball anchoring.

Thirdly the tree bunker 1, in addition to the main elements 2, the partitions 8 and any spacers 6, also comprises a number of cover plates 10 which are applied on the legs 4.

The cover plates 10 are flat rectangular, in this case also square, plates.

The form of the cover plates 10 needs to be adapted to the form of the base plates 3. In the case of triangular base plates 3, the cover plates 10 will be triangular.

The corners 10a of each cover plate 10 each rest on an upright leg 4, whereby one upright leg 4 can support up to four such corners 10a of four cover plates 10. By applying the cover plates 10, the pit 11 or the space created by the main elements 2 and the partitions 8 is closed as it were.

Finally, in this case the tree bunker 1 is provided with one frame 12 that is mounted on the legs 4 just as the cover plates 10, whereby the corners 12a of the frame 12 each rest on a leg 4.

Said frame 12 ensures an access to the aforementioned pit 11 via the opening of the frame 12.

In addition, said frame 12 can be provided with a tree frame 13. A tree frame 13 is a finish element that forms a sort of crown around the base of the trunk of the tree and chiefly has decorative value.

Furthermore, in this case the tree bunker 1 is provided with a geotextile cloth 14 that is applied over the cover plates 10. On the level of the frame 12, a hole or opening is provided in said geotextile cloth 14.

In the aforementioned example, the tree bunker 1 is a concrete tree bunker. This means that all parts are made from concrete or reinforced concrete.

A method to install a tree bunker 1 as shown in figure 1 is very simple and as follows.

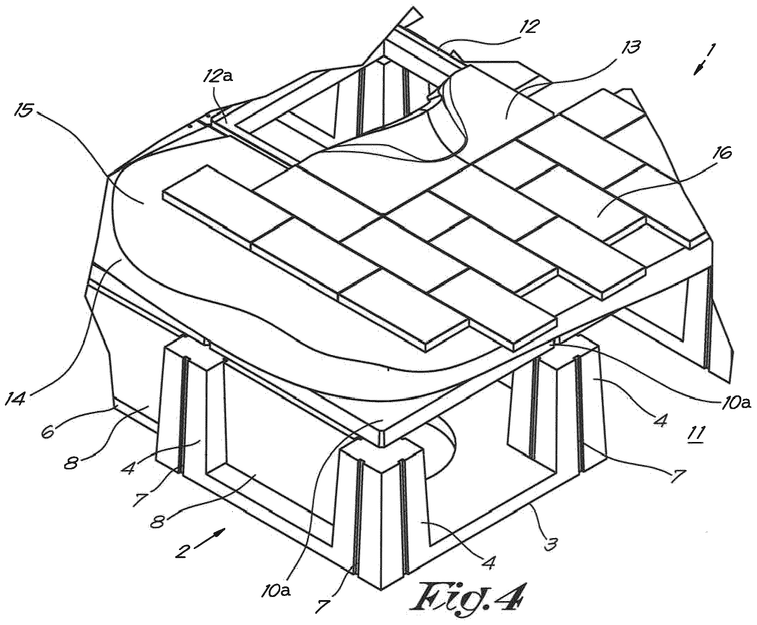

Using figure 4, the method will be clarified.

In a first step, a pit 11 is dug in the substrate where the tree bunker 1 is to be applied. In said pit 11 a foundation can be provided if necessary if the technical specifications of said location so require.

Subsequently, the main elements 2 in said pit 11 can be installed using the spacers 6, whereby the base plate 3 is installed on the bottom of the pit 11 with the four legs 4 pointing upward.

After installing a first main element 2, a spacer 6 is applied next to said already installed main element 2 to allow a next main element 2 to be installed at the correct distance.

In this way the main elements 2 can be installed in a regular grid 5 as shown in figure 3.

Subsequently the partitions 8 on the outer edges of the thus formed grid 5 are applied to form a tub 9 by sliding the partitions 8 into the slots 7 of the relevant adjoining legs 4.

Subsequently the tub 9 can be filled with a suitable tree soil.

Because the tub 9 is completely open this can be done very easily and the tree soil 29 can be distributed evenly over the entire tub 9.

It is important to note here that the excavated hole or pit 11 can be filled with a backfill medium before or after filling the tub 9 with tree soil 29.

Indeed, the partitions 8 are strong enough to resist the pressure of the aforementioned backfill medium soil and tree soil 29, such that a simultaneous and even filling of both the hole or pit 11 and the tub 9 is no longer necessary.

After filling the tub 9, the aforementioned cover plates 10 can be installed as shown in figure 1. The corners 10a of each cover plate 10 will rest on four legs 4.

Said cover plates 10 will close or cover the tub 9.

In order to allow a tree to be planted in the tree bunker 1, one frame 12 will also be installed.

The frame 12 is installed in the same way as the cover plates 10.

In an optional additional step, the cover plates 10 and the frame 12 can be adjusted to lie completely flat and stable.

The cover plates 10 can also be installed loosely on the legs 4. Under one of the corners 10a of the cover plate 10 a wedge-shaped element (not shown in the figures) can be applied to stabilise the cover plate 10. Rubber between the legs 4 and the cover plate 10 improves the contact surface and prevents wear and tear of concrete on concrete.

Subsequently, if desired but not necessary for the invention, a geotextile cloth 14 can be applied hereon. Said geotextile cloth 14 will seal any openings, cracks and the like which could be present between the cover plates 10 or between the tree bunker 1 itself and the adjoining infrastructure to ensure that in a next phase of the method the next layers can be installed.

On the level of the aforementioned frame 12, a hole or opening is provided in the geotextile cloth 14 in order to safeguard access to the tub 9.

A next phase or step of the method comprises applying a foundation layer or street layer 15, hereinafter referred to as street layer 15, on said geotextile cloth 14.

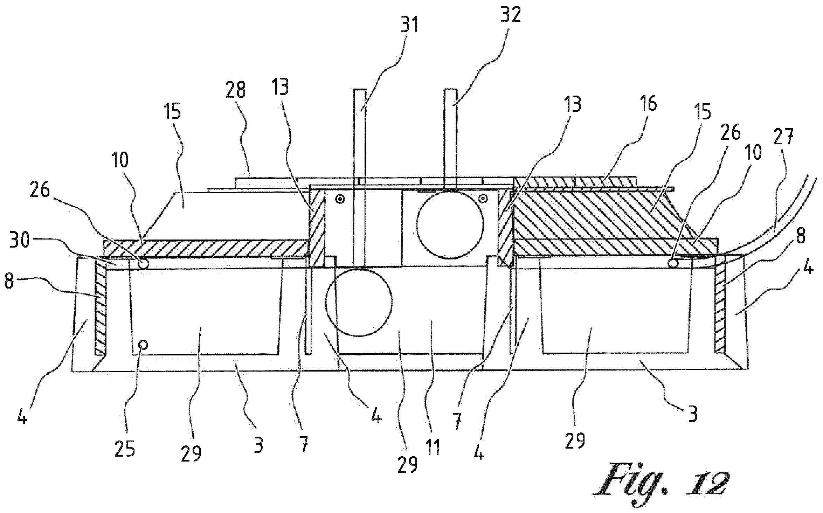

Said street layer 15, as shown in figure 12, is applied up against the edge of the frame 12.

Subsequently, a desired paving 16 can be applied hereon, such as for example paving stones or asphalt. Optionally, a surface level 28 can be constructed as well.

The tree bunker 1 is now ready for planting a tree. Finally, a tree frame 13 can subsequently be applied on the aforementioned frame 12 to completion the transition between the opening of the frame 12 and the base of the trunk of the tree.

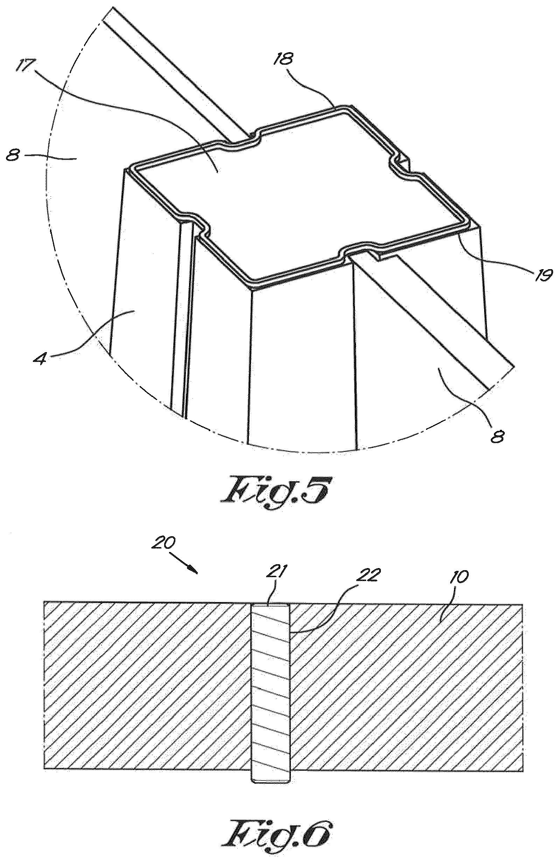

Figures 5 to 7 show an alternative embodiment, whereby in this case a foam rubber 18 is provided all around the upper surface 17 of the legs 4. The foam rubber extends along the peripheral edge 19 of the upper surface 17. This is shown in figure 5.

Said foam rubber is compressible. Instead of foam rubber, rubber or another seal can also be applied.

In addition, and optionally, in this embodiment the cover plates 10 are provided with an adjustment system 20 that will ensure that the four corners 10a of the cover plate 10 will effectively rest on the legs 4. The adjustment system 20 is shown in figure 6.

The adjustment systems 20 are installed on the same legs 4 as much as possible.

The aforementioned adjustment system 20 comprises one or more adjusting bolts 21 and one or more corresponding passages 22 near the corners 10a of the cover plate 10, all this such that when the corners 10a of the cover plates 10 rest on a leg 4 the adjusting bolts 21, when applied in the passages 22, can be screwed up against an upper surface 17 of the leg 4.

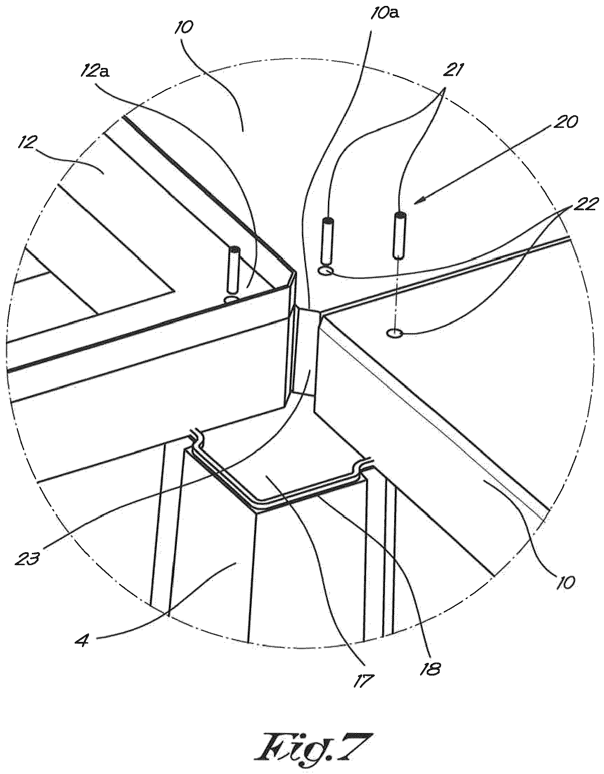

Furthermore, the corners 10a of the cover plates 10 are truncated or topped, such that, when resting on a leg 4, per four, or all, an opening 23 is created that reaches up to the leg 4, more specifically up to the upper surface 17. Said opening 23 is shown in figure 7, whereby one cover plate 10 is not drawn for the sake of clarity.

The aforementioned foam rubber ensures that said opening 23 is closed towards the bottom.

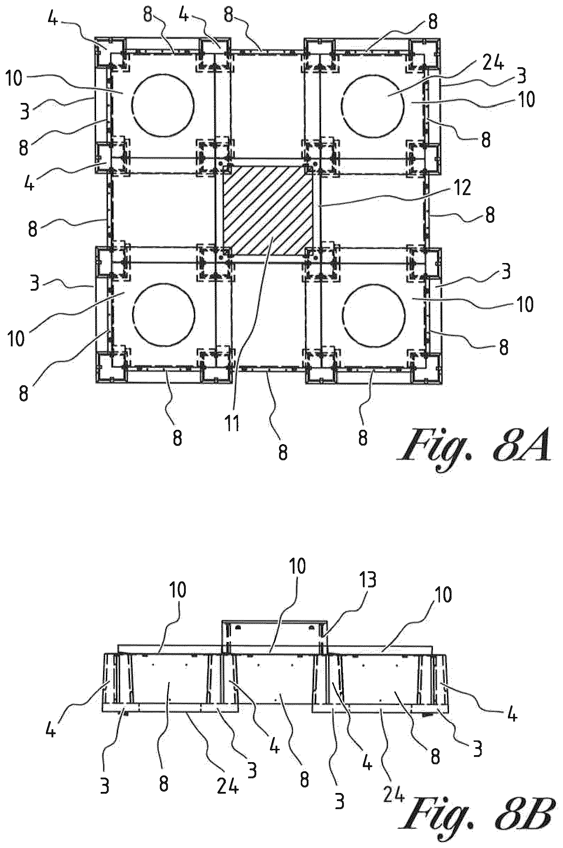

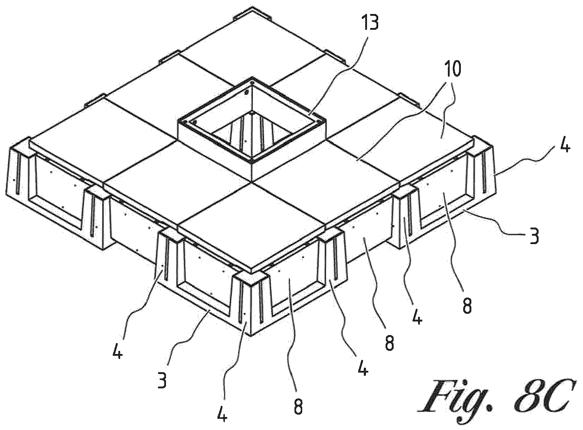

A number of example arrangements of a tree bunker are shown in figures 8-11. Figures A show a transparent top view.

Figure 8 shows a square arrangement of a tree bunker as described above. The arrangement comprises four main elements 2 arranged in a square.

Between two adjoining legs 4 of one and the same and a neighbouring main element 2, partitions 8 are provided. In this way the partitions 8 are suitable according to the outer contour of the square. In this way a square tub is delimited.

On the legs 4 of each main element 2, as well as on the legs 4 of two neighbouring main elements 2, cover plates 10 are applied.

The central space between the four main elements 2 is reserved for planting a tree. To this end, a frame 12 is applied which supports on a leg 4 of each of the surrounding four main elements 2.

The tree frame 13 consists of four upright walls and serves as tree guidance and border edging.

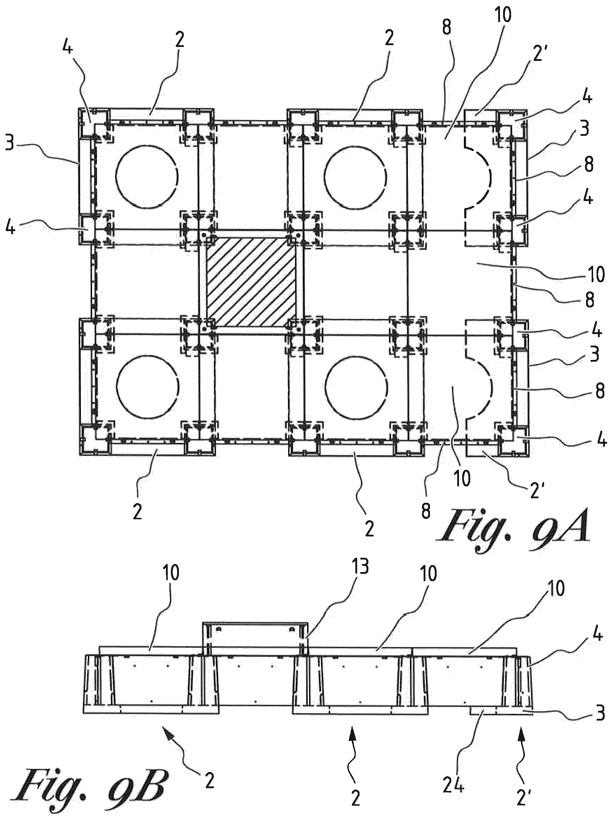

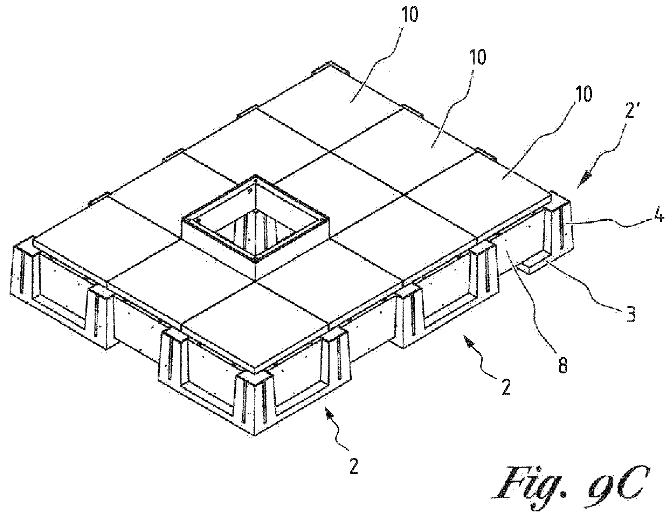

Figure 9 shows a rectangular tree bunker, comprising the four main elements 2 and the frame 12,13 for the tree space of figure 8, supplemented by two half main elements 2' which are arranged at a distance from two main elements 2.

The partitions 8 are applied between the legs 4 of the relevant main elements 2 which form the outer contour of a rectangle. In this way a rectangular tub is delimited.

Additional cover plates 10 are provided on the legs 4 of the half main elements 2' and the relevant neighbouring main elements 2.

The (legs of the) half main elements 2' are located at a distance from the (legs of the) main elements 2 equal to the length of a partition 8. Consequently, the same partitions 8 can be used as those used between two full main elements with four legs 4.

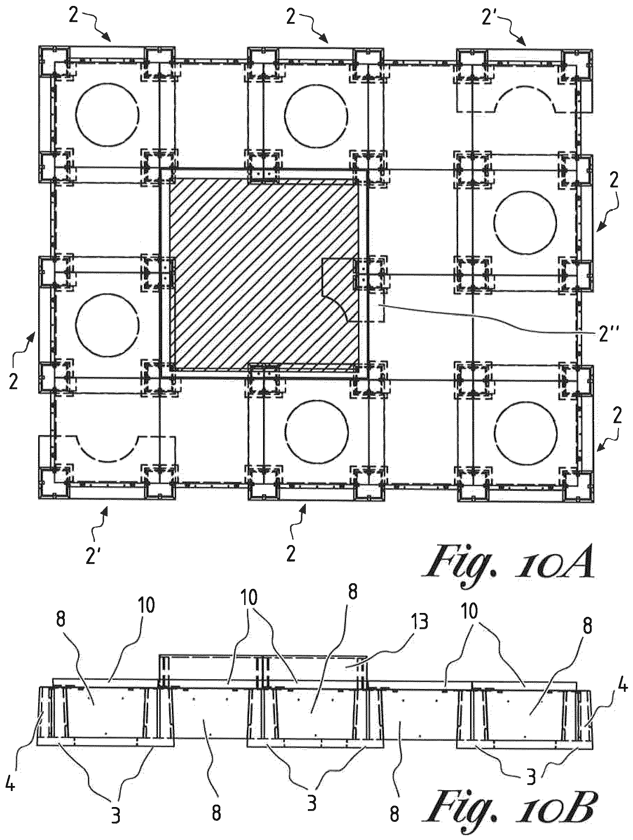

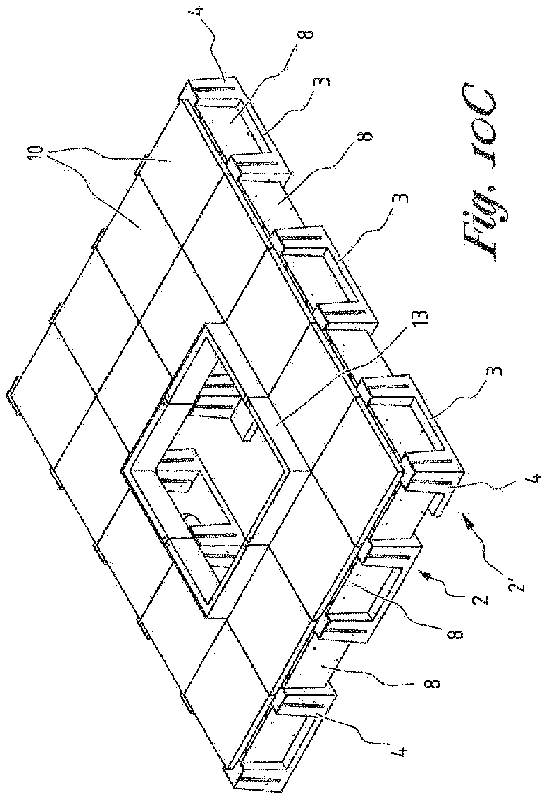

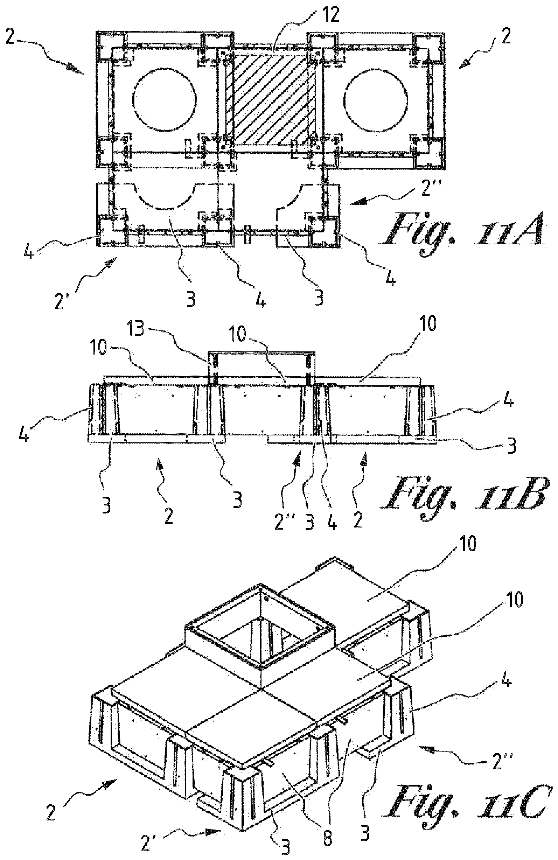

Figure 10 and 11 show arrangements of tree bunkers using full main elements 2, half 2' and quarter 2" main elements. It is understood that consequently almost every arrangement is possible.

Figure 12 shows a vertical cross-section of an arrangement of a square tree bunker according to figure 8.

The pit 11 and the space above the base plates 3 and delimited by the partitions 8 are filled with backfill medium soil and tree soil 29. This filled space is also provided with the necessary drainage 25, irrigation 26 and aeration 25,27.

A street layer 15 is provided on the cover plates 10 up against the edge of the frame 12. The geotextile cloth 14 is not shown in figure 12.

A desired paving 16 can be applied, such as for example paving stones or asphalt. Optionally, a surface level 28 can also be constructed.

Trees 31 and bushes 32 can be planted at different depths in the pit.

The tree frame 13 is applied 10 cm deeper than the bottom of the cover plate 10. Consequently, the tree frame 13 not only serves as tree guidance but the soil in the tree frame 12 cannot end up in the air layer 30 under the cover plate 10.

The method for installing the tree bunker 1 is very similar as described above, but in this embodiment the method comprises, after installing the cover plates 10, the step of tightening the adjusting bolts 21 in the passages 23 up against the upper surface 17 of the relevant leg 4.

The result is that the cover plates 10 are stabilised, i.e. cannot tilt or click.

The method in this embodiment, after installing the cover plates 10 and optionallyafter tightening the adjusting bolts 21, further comprises the step of grouting the cover plates 10 by filling the aforementioned opening 23 with mortar or the like.

The opening 23 that is created by the truncated corners 10a of the cover plates 10 and is delimited by the foam rubber 18 and the upper surface 17 of the legs 4, is a completely encased and closed space, with the exception of the opening on the upperside.

Upon curing, the mortar or the like will ensure that the cover plates are completely fixed and stable.

For the sake of clarity, it is pointed out that the application of the adjustment system 20 is not necessary and that the cover plates 10 can also be covered or loosely laid without using an adjustment system 20.

The present invention is by no means limited to the embodiments described as an example and shown in the figures, however, such tree bunker and method applied thereby can be realised according to different variants, without departing from the scope of the invention.

## Claims

1. - Tree bunker (1) **characterised in that** the tree bunker (1) comprises the following components:
- one or more main elements (2) consisting of a base plate (3) with four legs thereon (4), said main elements (2) being installed at a relative distance from each other in a pit (11) in the substrate;
- whereby the legs (4) are provided lengthways with provisions (7) into which partitions (8) can be slid;
- a number of partitions (8) slideably mounted in the aforementioned provisions (7) between two adjoining legs (4) of one main element (2) and/or between two adjoining legs (2) of two different adjoining main elements (2) to form a tub (9);
- a number of cover plates (10) mounted on the legs (4), whereby the corners (10a) of the cover plate (10) each rest on an upright leg, in order to cover the space created by the main elements (2) and partitions (8);
- optionally one or more frames (12) to mount on the legs (4), whereby the corners (12) of the frame (12) each rest on an upright leg.

2. - Tree bunker (1) according to claim 1, **characterised in that** the main element (2) comprises a rectangular base plate (3) and four legs (4) on the corners of the base plate (3), whereby on each longitudinal side the legs (4) are provided with slots (7) for partitions (8).

3. - Tree bunker (1) according to claim 2, **characterised in that** the main element (2) is executed as a half main element (2') or a quarter main element (2"), i.e. half (2') or one quarter of said main element (2) comprising a ½, respectively ¼, base plate (3) and two legs (4), respectively one leg (4).

4. - Tree bunker (1) according to any one of the previous claims, **characterised in that** each cover plate (10) is provided with an adjustment system (20) that will ensure that the corners (10a) of the cover plate (10) will effectively rest on the legs (4), whereby the aforementioned adjustment system (20) comprises one or more adjusting bolts (21) and one or more corresponding passages (22) near the corners (10a) of the cover plate (10), all this such that when the corners (10a) of the cover plates (10) rest on a leg (4), the adjusting bolts (21), when applied in the passages (22), can be screwed up against an upper surface (17) of the leg (4).

5. - Tree bunker (1) according to any one of the claims 1 to 3, **characterised in that** a wedge-shaped element is applied between one leg (4) and one corner (10a) of the cover plates (10) for stabilising the cover plates (10).

6. - Tree bunker (1) according to any one of the previous claims, **characterised in that** the corners (10a) of the cover plates (10) are truncated or topped such that, when resting on a leg (4), an opening (23) is created that reaches up to the leg (4).

7. - Tree bunker (1) according to any one of the previous claims, **characterised in that** a rubber, foam rubber (18) or seal is provided all around the upper surface (17) of the legs (4).

8. - Tree bunker (1) according to any one of the previous claims, **characterised in that** a frame (12) is provided with, or can be provided with, a tree frame (13).

9. - Tree bunker (1) according to any one of the previous claims, **characterised in that** the main elements (1) are provided with one or more lifting anchor points which can serve as mounting anchors for the underground tree root ball anchoring.

10. - Tree bunker (1) according to any one of the previous claims, **characterised in that** the partitions (8) are provided with openings, with or without an at least partially open concrete structure.

11. - Tree bunker (1) according to any one of the previous claims, **characterised in that** between adjoining main elements (2) a spacer (6) is applied, whereby the length dimension of the spacer (6) is such that the distance between two adjoining legs (4) of two adjoining main elements (2) is equal to the distance between two adjoining legs (4) of a main element (2).

12. - Method for installing a tree bunker (1) according to any one of the previous claims, **characterised in that** the method comprises the following steps:
- digging a pit (11) in the substrate;
- optionally providing a foundation;
- installing the main elements (2) with the legs (4) at an equal relative distance from each other, optionally using the spacers (6);
- installing or applying the partitions (8) between adjoining legs (4) to form a tub (9);
- filling the tub (9) with the suitable tree soil (29) ;
- installing cover plates (10) on the legs (4), whereby the corners (10a) of each cover plate (10) are installed on legs (4);
- optionally installing at least one frame (12) on the legs (4), whereby the corners (12a) of the frame (12) rest on legs (4).

13. - Method according to claim 12, **characterised in**
**that** the method before, after or during executing the step:
- filling the tub (9) with the suitable tree soil (29) comprises the following additional step:
- backfilling the pit (11) with a backfill medium around the main elements (2).

14. - Method according to any one of the previous claims 12 or 13, **characterised in that** upon installing the cover plates (10), on the legs (4) on one of the corners (10a) of the cover plates (10), a wedge-shaped element is applied between the relevant cover plate (10) and the leg (4).

15. - Method according to any one of the previous claims 12 to 14, **characterised in that** cover plates (10) are used, the corners (10a) of which are truncated or topped such that, when resting on a leg (4), an opening (23) is created that reaches up to the leg (4) and that the method, after installing the cover plates (10), comprises the step of grouting the cover plates (10) by filling the aforementioned opening (23) with mortar or the like.
